(19) Europäisches Patentamt
European Patent Office
Office européen des brevets

(11) Veröffentlichungsnummer: **0 364 853 A2**

# (12) EUROPÄISCHE PATENTANMELDUNG

(21) Anmeldenummer: **89118738.7**

(22) Anmeldetag: **09.10.89**

(51) Int. Cl.5: **C08L 63/10 , C08L 67/07 , C08L 79/08 , C08K 5/341 , //(C08L63/10,67:07,79:08)**

(30) Priorität: **15.10.88 DE 3835197**

(43) Veröffentlichungstag der Anmeldung: **25.04.90 Patentblatt 90/17**

(84) Benannte Vertragsstaaten: **CH DE ES FR GB IT LI NL**

(71) Anmelder: **BASF Aktiengesellschaft**
**Carl-Bosch-Strasse 38**
**D-6700 Ludwigshafen(DE)**

(72) Erfinder: **Peter, Roland, Dr.**
**Pfalzring 92**
**D-6704 Mutterstadt(DE)**
Erfinder: **Holoch, Jan, Dr.**
**Koenigsberger Strasse 22 a**
**D-6906 Leimen(DE)**
Erfinder: **Eisenbarth, Philipp, Dr.**
**Gutleutstrasse 12**
**D-Bad Duerkheim(DE)**

## (54) Modifizierte Vinylesterharze.

(57) Die Erfindung betrifft härtbare Formmassen, enthaltend

A. einen endständig ungesättigten Vinylester,
B. einen ungesättigten Polyester, der Cyclopenten- oder Cyclohexen-Endgruppen aufweist,
C. ein Bismaleinimid,
D. ein Aminophenol als Comonomeres sowie gegebenenfalls
E. übliche Zusatzstoffe.

Die Formmassen lassen sich zu Formstoffen mit hoher Temperaturbeständigkeit und guten mechanischen Eigenschaften auch bei Dauertemperaturbelastung aushärten.

EP 0 364 853 A2

# Modifizierte Vinylesterharze

Die Erfindung betrifft Formmassen aus Vinylesterharzen, die durch Zusatz von ungesättigten Polyesterharzen und BBismaleinimiden zu Formmassen mit guter Temperaturbeständigkeit und hoher Zähigkeit ausgehärtet werden können.

Formstoffe aus Vinylesterharzen zeichen sich durch gute Zähigkeit aus, für eine Dauergebrauchstemperatur oberhalb 150 °C sind sie jedoch nur beschränkt einsetzbar. Durch Kombination mit ungesättigten Polyestern, die Cyclopenten- oder Cyclohexenendgruppen enthalten, läßt sich die Wärmeformbeständigkeit von Vinylesterharzen zwar verbessern, solche Formstoffe weisen jedoch nur mäßige mechanische Eigenschaften auf.

Der Erfindung lag daher die Aufgabe zugrunde, härtbare Formmassen auf Basis von Vinylesterharzen bereitzustellen, die sich zu Formstoffen mit guten mechanischen Eigenschaften, insbesondere hoher Zähigkeit, und guter Temperaturbeständigkeit aushärten lassen.

Diese Aufgabe wird dadurch gelöst, daß Vinylesterharze mit ungesättigten Polyestern, die Cyclopenten- oder Cyclohexenendgruppen enthalten, und mit Bismaleinimiden kombiniert werden, so daß die gehärteten Formstoffe nahezu die Temperaturbeständigkeit von Bismaleinimidharzen bei gleichzeitig guter Zähigkeit aufweisen.

Gegenstand der Erfindung sind demzufolge härtbare Formmassen, enthaltend

A) einen endständig ungesättigten Vinylester,

B) einen ungesättigten Polyester, der Cyclopenten- oder Cyclohexenendgruppen aufweist,

C) ein Bismaleinimid,

D) ein Aminophenol als Comonomeres, sowie gegebenenfalls

E) übliche Zusatzstoffe.

Kombinationen von ungesättigten Polyestern mit Bismaleinimiden sind bereits länger bekannt. So werden in der DE-B 2 143 051 Mischungen bzw. Präpolymere aus Bismaleinimiden, Polyaminen und ungesättigten Polyestern beschrieben. Aminophenole als Comonomere sind nicht genannt. Die offenbarten Polyester sind größtenteils zur Herstellung hochwärmeformbeständiger Formstoffe nicht geeignet. Wählt man für den Polyester aus der Vielzahl der aufgeführten Dicarbonsäuren die Endomethylentetrahydrophthalsäure aus und setzt die minimale Menge an Bismaleinimid-Präpolymeren ein, so erhält man zwar einen temperaturbeständigen Formstoff, der aber bei Dauertemperaturbelastung den erfindungsgemäßen Formstoffen unterlegen ist. Der Polyester weist keine Cyclopenten-Endgruppen auf; die Endomethylentetrahydrophthalsäure ist vielmehr in der Polyester-Kette eingebaut.

In EP 167 304 wird die Kombination von Bismaleinimiden mit Vinylestern beschrieben. Um eine gute Wärmeformbeständigkeit zu erreichen, ist allerdings ein sehr hoher Bismaleinimidanteil erforderlich, was die Formmasse stark verteuert. Im Beispiel 11 von US-A 4 374 218 ist eine Mischung aus einem Vinylester, einem Bismaleinimid und einem Diamin als Comonomerem beschrieben. In beiden Druckschriften ist Aminophenol als Comonomer nicht genannt. Dieses Comonomer bewirkt, daß ausgehärtete Formteile auf Basis der erfindungsgemäßen Formmassen gute mechanische Eigenschaften aufweisen; außerdem ist es im Gegensatz zu den gängigen Diamin-Comonomeren nicht toxisch.

Die nicht vorveröffentlichte deutsche Patentanmeldung P 37 36 286.6 betrifft härtbare Formmassen aus einem ungesättigten Polyester mit endständigen Cyclopenten- oder Cyclohexengruppen, die nach Zusatz eines Bismaleinimids sich in Formstoffen mit guten thermischen Eigenschaften härten lassen.

Zu den Komponenten ist im einzelnen zu sagen:

A. Vinylester:

Unter Vinylestern versteht man gemeinhin Umsetzungsprodukte von Polyepoxiden mit ungesättigten Monocarbonsäuren, vorzugsweise mit Methacrylsäure. Vielfach werden diese Produkte in ungesättigten Monomeren, vorzugsweise Styrol, gelöst. Solche Harze sind z.B. in den US-PS 3 066 112 und 3 179 623 beschrieben, wobei bevorzugt Polyepoxide auf Basis von Bisphenol A zur Anwendung kommen. Sie zeichnen sich durch hohe Zähigkeit und gute Chemikalienbeständigkeit bei begrenzter Wärmeformbeständigkeit aus. Vinylesterharze aus Novolak-Polyepoxiden und (Meth)-Acrylsäure, wie sie beispielsweise in der US-PS 3 256 226 beschrieben sind, weisen dagegen höhere Wärmeformbeständigkeiten aber geringere Zähigkeiten auf.

Kennzeichnend für die Klasse der Vinylesterharze ist die Gruppe

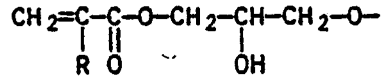

mit R = H oder $CH_3$.

Die zur Herstellung der Vinylester verwendeten Epoxidharze leiten sich von mehrwertigen Phenolen und Alkoholen ab. Die Epoxidäquivalentgewichte können zwischen 60 und 2000 liegen. Die Synthese der Epoxidharze erfolgt durch Umsetzung der mehrwertigen Phenole und Alkohole mit Epichlorhydrin und anschließender Dehydrochlorierung mit Natronlauge. Die genauen Herstellbedingungen sowie typische Vertreter aus der Klasse der Epoxidharze werden z.B. im "Handbook of Epoxy Resins" von Henry Lee und Kris Neville, Mc Graw-Hill, 1967, beschrieben.

Bevorzugte Epoxidharze sind die Glycidylether auf Basis von Bisphenol A mit Epoxidäquivalentgewichten von 140 bis 1000. Als weitere Gruppe von Polyepoxiden kommen solche auf Basis von kernhydriertem Bisphenol A und Bisphenol F, 2,2-Bis-(4-hydroxycyclohexyl)propan bzw. Bis-(4-hydroxycyclohexyl)methan, sowie epoxidierte Cycloolefine in Frage. Weiterhin stellen Polyglycidylether von Novolakharzen eine wichtige Gruppe von Epoxidharzen dar. Darunter fallen die Kondensationsprodukte von Phenol oder Kresol mit Aldehyden wie Formaldehyd oder Butyraldehyd ebenso wie Additionsprodukte von Phenol oder substituierten Phenolen mit Olefinen wie Dicyclopentadien, Isopren oder Norbornen. weiterhin zählen zur Gruppe der bevorzugten Epoxidharze solche, die sich von Alkylenpolyphenolen ableiten, wie z.B. Bis-(4-hydroxyphenyl)-methan, 1,1,2,2-Tetrakis-(4-hydroxyphenyl)ethan oder 1,1,3-Tris-(4-hydroxyphenyl)propan.

Beispielhaft für Epoxidharze auf Basis mehrwertiger aliphatischer Alkohole seien genannt die Polyglycidylether von 1,4-Butandiol, 1,6-Hexandiol, Trimethylolpropan und Poly-THF.

Unter ungesättigten Monocarbonsäuren versteht man $\alpha,\beta$-ungesättigte Carbonsäuren wie Acrylsäure oder Methacrylsäure sowie die Halbester von ungesättigten Dicarbonsäuren. Besonders bevorzugt ist Maleinsäure. Die Umsetzung der Epoxidharze mit der ungesättigten Monocarbonsäure wird ohne Katalysatoren oder in Gegenwart von Lewisbasen wie beispielsweise tertiären Aminen, Triarylphosphinen, Acetaten oder Alkoholaten sowie Ammonium- und Phosphoniumhalogeniden bei Temperaturen von 60 bis 130 °C in Gegenwart eines inerten Lösungsmittels oder in der Schmelze durchgeführt. Dabei werden pro Epoxidgruppe von 0,6 bis 1,1 Äquivalente der ungesättigten Monocarbonsäure verwendet.

Im erweiterten Sinn zählen zur Gruppe der Vinylester auch die Vinylesterurethane, die durch Umsetzung von Polyisocyanaten mit Hydroxyalkylacrylaten oder -methacrylaten und Polyolen hergestellt werden. Charakteristisch für diese Harzklasse ist die funktionelle Einheit:

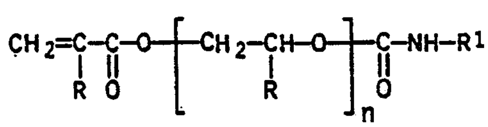

wobei n = 1 bis 50, R = H oder $CH_3$ und $R^1$ einen aliphatischen oder aromatischen Rest darstellen. Verbindungen dieser Art werden z.B. in den US-PS 3 297 745, 4 360 653 und 4 374 229 sowie in EP 2 129 beschrieben.

Als typische Vertreter von Polyisocyanaten zur Herstellung der Vinylesterurethane seien genannt: Toluoldiisocyanat, Diphenylmethandiisocyanat, Isophorondiisocyanat, Hexamethylendiisocyanat sowie deren Oligomere. Beispiele für die Gruppe der Hydroxyalkyl(meth-)acrylate sind: Hydroxyethyl(meth-)acrylat, Hydroxypropyl(meth-)acrylat und Trimethylolpropandi(meth-)acrylat.

Eine Vielzahl von Polyolen, Polyetherpolyolen und Polyesterpolyolen kann mit den Isocyanaten umgesetzt werden. Hierzu zählen Polyetherpolyole auf Basis von Ethylenglykol, 1,2-Propylenglykol und 1,4-Butylenglykol, ethoxyliertes oder propoxyliertes Bisphenol A; Polyesterpolyole auf Basis von Maleinsäure, Phthalsäure oder Adipinsäure. Zur Herstellung läßt man die einzelnen Komponenten, Polyisocyanat, Polyol und Hydroxyalkyl(meth-)acrylat bei 50 bis 100 °C für 1 bis 5 Stunden reagieren. Als Reaktionsbeschleuniger finden vorwiegend tertiäre Amine und Zinn-Verbindungen Verwendung.

B. Ungesättigte Polyester

Als ungesättigte Polyester B eignen sich die üblichen Kondensationsprodukte aus mehrwertigen, insbesondere zweiwertigen Carbonsäuren oder deren veresterbaren Derivaten, insbesondere deren Anhydriden, mit mehrwertigen, insbesondere zweiwertigen Alkoholen, sowie gegebenenfalls zusätzlich einwertigen Carbonsäuren oder einwertigen Alkoholen, wobei zumindest ein Teil der Einsatzstoffe über ethylenisch ungesättigte, copolymerisationsfähige Gruppen verfügen muß.

Als Alkoholkomponente eignen sich z.B. Ethylenglykol, Propylenglykol-1,2, Propandiol-1,3, Butandiol-1,3, Butandiol-1,4, Hexandiol-1,6, Hexantriol-1,2,6, Neopentylglykol, Diethylenglykol, Triethylenglykol, Dipropylenglykol, Cyclohexandiol-1,2, hydriertes Bisphenol A, Cyclohexandimethanol, ethoxyliertes Bisphenol A sowie Dihydroxymethyltricyclodecan, Trimethylolpropan, Glycerin und Pentaerythrit.

Geeignete Carbonsäuren bzw. deren Derivate sind zweibasische olefinisch ungesättigte Carbonsäuren, wie z.B. Maleinsäure, Fumarsäure, Chlormaleinsäure, Itaconsäure, Citraconsäure, Methylenglutarsäure und Mesaconsäure bzw. deren Ester oder vorzugsweise deren Anhydride. In die Polyester können andere modifizierend wirkende zweibasische, ungesättigte und/oder gesättigte sowie aromatische Carbonsäuren eingebaut werden, z.B. Bernsteinsäure, Glutarsäure, Adipinsäure, Sebacinsäure, Phthalsäureanhydrid, o-Phthalsäure, Isophthalsäure, Terephthalsäure und Tetrahydrophthalsäure.

Zum Einbau der Cyclopenten- bzw. Cyclohexenendgruppen eignen sich z.B. Dicyclopentadien (DCPD) bzw. dessen Derivate oder Substitutionsprodukte, 8(9)-Hydroxy-tricyclo[5.2.1.$0^{2,6}$]dec-3-en, N-Hydroxyalkyltetrahydrophthalimid und N-Hydroxyalkylendomethylentetrahydrophthalimid. In einer bevorzugten Ausführungsform wird freie Maleinsäure bei Temperaturen zwischen 120 und 140 °C mit DCPD umgesetzt, wobei man den Maleinsäuredihydrodicyclopentadienylmonoester erhält, der als monofunktionelle Carbonsäure der Polykondensation zugesetzt wird. Dieselbe Verbindung kann auch durch Umsetzung von Maleinsäureanhydrid und 8(9)-Hydroxy-tricyclo-[5.2.1.$0^{2,6}$]dec-3-en erhalten werden.

Bevorzugte Polyester B sind somit gekennzeichnet durch die Endgruppen

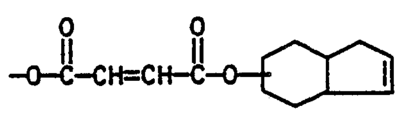

oder

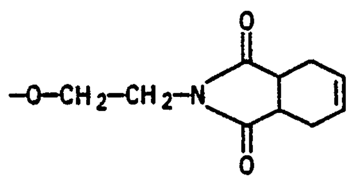

Bei einer anderen Ausführungsform erfolgt der Endgruppenverschluß mit N-Hydroxyalkyltetrahydrophthalimid bzw. N-Hydroxyalkylendomethylentetrahydrophthalimid, wie in der DE-A-3 230 924 beschrieben ist.

Der Anteil der Komponente B, bezogen auf A, kann 1 bis 60 Gew.% betragen, bevorzugt sind 5 bis 30 Gew.%.

C. Bismaleinimide

Komponente C sind Bismaleinimide der allgemeinen Formel

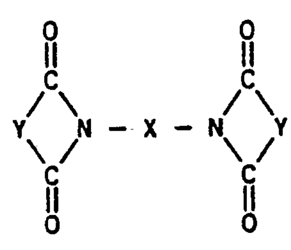

wobei Y eine gegebenenfalls substituierte Alkenylgruppe ist und X einen zweiwertigen Rest mit zumindest zwei Kohlenstoffatomen bedeutet. Bismaleinimide sind z.B. aus DE-A-20 40 094, DE-A-27 19 903 und DE-A-3 247 058 bekannt. Bevorzugte Bismaleinimide sind 4,4′-Bismaleinimidodiphenylmethan, 4,4′-Bismaleinimidodiphenylether, 3,3′-Bismaleinimidodiphenylsulfon, 1,3-Bismaleinimidobenzol, 2,4-Bismaleinimidotoluol, 1,6-Bismaleinimidohexan und 2,2,4-Trimethyl-1,6-bismaleinimidohexan. Neben Bismaleinimiden sind grundsätzlich auch Polymaleinimide sowie Mischungen verschiedener Bismaleinimide geeignet. Die Bismaleinimide können auch bis zu 20 % eines Monoimids enthalten.

Der Anteil der Komponente C, bezogen auf A, kann zwischen 50 und 500 Gew.% liegen, bevorzugt sind 100 bis 300 Gew.%.

D. Comonomere

Geeignete Comonomere D sind Aminophenole, vorzugsweise m-Aminophenol. Ihr Anteil beträgt 5 bis 150 Gew.%, insbesondere 5 bis 50 Gew.%, bezogen auf A.

E. Zusatzstoffe

Als weitere übliche Zusatzstoffe kommen in Frage:

- Füllstoffe, wie Kreide, Kaolin, Quarzmehl, Dolomit, Schwerspat, Metallpulver, Aluminiumoxidhydrat, Zement, Talkum, Kieselgur sowie Pigmente,
- Verstärkungsfasern, wie Glas-, Kohlenstoff-, Asbest- und Cellulosefasern sowie synthetische organische Fasern, z.B. aus Polyethylen, Polycarbonsäureestern, Polycarbonat oder Polyamiden,
- Inhibitoren, wie Hydrochinone, Chinone, Nitrobenzole, N-Nitrosoverbindungen, Salze des zweiwertigen Kupfers und quarternäre Ammoniumsalze,
- Polymerisationsinitiatoren, wie Benzoylperoxid, Methylethylketonperoxid, tert.-Butylperoktoat, tert.-Butylperbenzoat, Cyclohexanonperoxid, Acetylacetonperoxid, Perketale, Percarbonate, Dicumylperoxid, C-C-labile Verbindungen und Azoverbindungen,
- Härtungsbeschleuniger, z.B. Oktoate oder Naphthenate von Kupfer, Blei, Calcium, Magnesium, Cer und insbesondere von Mangan und Kobalt; ferner aromatische Amine, wie Dimethylanilin und Diethylanilin, Imidazole, tertiäre Phosphine, organische Säuren,
- Schrumpfmindernde Polymerisate, wie Polystyrol, Polymethylmethacrylat, Polyvinylacetat, Polyethylen, Polybutadien und Pfropfcopolymere, Copolymere sowie Kondensationspolymere, wie gesättigte Polyester oder Polyesterurethane,
- Elastifizierende Zusätze, z.B. kautschukartige Blockcopolymere und modifiziertes Polytetrahydrofuran,
- Formtrennmittel, flammhemmende Stoffe, Weichmacher.

Zur Herstellung der erfindungsgemäßen Formmassen werden die Ausgangsmaterialien unter Anwendung der üblichen Techniken vermischt und auf Temperaturen zwischen 70 bis 190°C erhitzt, wobei je nach Reaktionsdauer unter Viskositätsanstieg sich ein Präpolymer bilden kann. Je nach Comonomertyp und -menge erhält man nach dem Abkühlen eine viskose Lösung oder einen glasartig erstarrten Feststoff, der je nach Verwendungszweck gemahlen oder in einem Lösungsmittel (wie z.B. Dimethylformamid oder N-Methylpyrrolidon) gelöst wird. Die Herstellung der Harze kann auch in einem Lösungsmittel erfolgen.

Die erfindungsgemäßen Formmassen lassen sich z.B. durch Verpressen oder Spritzgießen, Vakuuminjektion oder Wickeln verarbeiten.

Sie sind als Imprägnier-, Gieß- und Laminierharze oder als Formmassen (gefüllt oder ungefüllt) einsetzbar. Dienen sie zur Herstellung von Hochleistungsverbundwerkstoffen, so kann die Tränkung von Glas-, Kohlenstoff-oder Aramidfasern unter Bildung von unidirektionalen Prepregs oder Gewebeprepregs entweder aus der Schmelze bei 50 bis 150°C oder aus Lösung erfolgen. Geeignete Lösungsmittel sind halogenierte Kohlenwasserstoffe, wie z.B. Dichlormethan, Ketone wie z.B. Aceton oder Methylethylketon, ferner Glykolester, Toluol, Dimethylformamid, N-Methylpyrrolidon sowie Gemische aus mehreren Lösungsmitteln.

Die Härtung erfolgt bei Temperaturen von ca. 100 bis 300°C, gegebenenfalls unter Druck, vorzugsweise zwischen 120 bis 260°C. Die gewählte Härtungstemperatur hängt entscheidend von der Länge der Härtungszeit ab. Vielfach ist eine stufenweise Härtung vorteilhaft, wobei bei einer niedrigeren Temperatur zunächst unter Formgebung eine Vernetzung der Polymeren herbeigeführt wird. Nach Entformen kann sich dann zur vollständigen Aushärtung eine unter Umständen mehrstündige Nachhärtung oberhalb 200°C anschließen.

Die ausgehärteten Formstoffe besitzen eine sehr hohe Wärmeformbeständigkeit und sie verlieren ihre guten mechanischen Eigenschaften auch bei Dauertemperaturbelastung nicht. Ihre Wasseraufnahme ist gering.

Es können daraus Isoliermaterialien, Strukturbauteile, Apparategehäuse und elektrische Bauteile hergestellt werden, die hohen Temperaturen ausgesetzt sind.

Die in den folgenden Beispielen genannten Teile und Prozente beziehen sich auf das Gewicht. Die

Messungen der Glasübergangstemperatur (Tg) erfolgen an 6x1x0,1 cm großen Probekörpern mit Hilfe der Torsions-Schwingungsanalyse nach DIN 53 455. Für die Prüfung der mechanischen Eigenschaften wurden 20 x 20 x0,4 cm große Platten gegossen. Messungen von E-Modul wurden nach DIN 53 457/3, von Zugfestigkeit und Bruchdehnung nach DIN 53 455/3 vorgenommen.

Beispiel 1 - Vinylester

380 Teile des Diglycidylethers von Bisphenol A mit einem Epoxidäquivalentgewicht von 188 (Epikote 828 der Fa. Shell) wurden bei 110 °C in Gegenwart von 0,5 % Tetramethylammoniumchlorid als Katalysator und 0,1 % Hydrochinon als Inhibitor mit 172 Teilen Methacrylsäure umgesetzt. Nach 5 Stunden war ein Epoxidwert von 0,025, eine Säurezahl von 6 und eine Schmelzviskosität (bei 125 °C) von 305 mPas erreicht. Zur Härtung wurde bei 100 °C der Schmelze 1,2 % Dicumylperoxid zugesetzt, in eine Metallform gegossen, bei 130 °C eine Stunde gehärtet und 12 Stunden bei 140 °C nachgehärtet.

Beispiel 2 - Ungesättigter Polyester

490 Teile Maleinsäureanhydrid, 726 Teile Dicyclopentadien und 90 Teile Wasser wurden unter Rühren und Darüberleiten von Stickstoff 30 Minuten bei 135 °C und 1 Stunde bei 145 °C gerührt. 171 Teile Ethylenglykol, 2,7 Teile Piperidin und 140 Teile Xylol wurden hinzugefügt. 7 Stunden wurde bei 180 °C Kondensationswasser entfernt. Das Xylol wurde bei 180 °C unter Vakuum abgezogen. Man erhielt 1330 Teile eines ungesättigten Polyesters mit Säurezahl 19 und einer Viskosität (100 °C) von 400 mPa•s. Die Härtung wurde analog zu Beispiel 1 durchgeführt.

Beispiel 3 - Bismaleinimid

In einem Reaktionsgefäß wurden unter Rühren 425 Teile N,N′-4,4′-Bismaleinimidodiphenylmethan bei einer Badtemperatur von 160 °C in Gegenwart von 0,8 Teilen Hydrochinon aufgeschmolzen. Anschließend gab man 75 Teile m-Aminophenol hinzu und rührte 5 Minuten lang. Die Schmelzviskosität bei 125 °C betrug 330 mPas.

Beispiel 4 - Erfindungsgemäße Mischung

30 Teile des nach Beispiel 1 hergestellten Vinylesters und 10 Teile des nach Beispiel 2 hergestellten ungesättigten Polyesters wurden bei 120 °C mit 60 Teilen Bismaleinimidharz nach Beispiel 3 homogen vermischt. Die Schmelze wurde in eine Metallform gegossen und anschließend 1 Stunde bei 150 °C, 1 Stunde bei 180 °C und 1 Stunde bei 220 °C ausgehärtet. Schließlich wurde 10 Stunden bei 240 °C nachgehärtet.

Beispiel 5 - Erfindungsgemäße Mischung

Die in Beispiel 4 beschriebenen Mengen an Vinylester, Polyester und Bismaleinimid wurden beibehalten. Die homogene Schmelze wurde auf 100 °C abgekühlt, bevor 0,6 Teile Dicumylperoxid zugesetzt wurden. Die Härtung wurde wie in Beispiel 4 beschrieben durchgeführt.

| | Beispiele | | | | |
|---|---|---|---|---|---|
| Eigenschaft | 1 | 2 | 3 | 4 | 5 |
| Glastemperatur [°C] | 148 | 280 | 310 | 310 | 275 |
| Zug-E-Modul [MPa] | 3600 | 3710 | 4300 | 35400 | 3840 |
| Zugfestigkeit [MPa] | 74 | 49 | 68 | 70 | 67 |
| Bruchdehnung [%] | 4,2 | 1,9 | 2,6 | 4,0 | 3,8 |

**Ansprüche**

1. Härtbare Formmassen, enthaltend
A. einen endständig ungesättigten Vinylester,
B. einen ungesättigten Polyester, der Cyclopenten- oder Cyclohexen-Endgruppen aufweist,
C. ein Bismaleinimid,
D. ein Aminophenol als Comonomeres, sowie gegebenenfalls
E. übliche Zusatzstoffe.

2. Härtbare Formmassen nach Anspruch 1, dadurch gekennzeichnet, daß der Vinylester A die Gruppierung

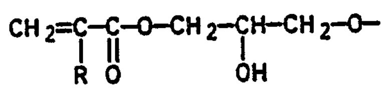

mit R = H oder $CH_3$ aufweist.

3. Härtbare Formmassen nach Anspruch 1, dadurch gekennzeichnet, daß der Polyester B folgende Endgruppen aufweist:

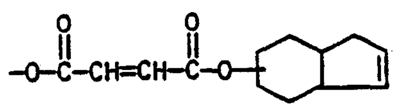

oder

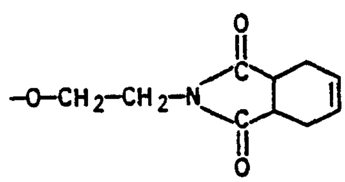

4. Härtbare Formmassen nach Anspruch 1, dadurch gekennzeichnet, daß das Bismaleinimid C die Formel

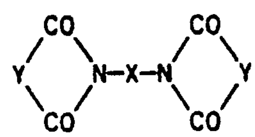

aufweist, wobei Y eine gegebenenfalls substituierte Alkenylgruppe ist und X einen zweiwertigen Rest mit mindestens 2 Kohlenstoffatomen bedeutet.

5. Härtbare Formmassen nach Anspruch 1, dadurch gekennzeichnet, daß der Polyester B in Mengen von 1 bis 60 Gew.%, bezogen auf A, enthalten ist.

6. Härtbare Formmassen nach Anspruch 1, dadurch gekennzeichnet, daß das Bismaleinimid C in Mengen von 50 bis 500 Gew.%, bezogen auf A, enthalten ist.

7. Härtbare Formmassen nach Anspruch 1, dadurch gekennzeichnet, daß sie 5 bis 150 Gew.%, bezogen auf A, m-Aminophenol als Comonomer D enthalten.

8. Verwendung der Formmassen nach Anspruch 1 zur Herstellung von Formstoffen.

9. Verwendung der Formmassen nach Anspruch 1 und Verstärkungsfasern zur Herstellung von Hochleistungsverbundwerkstoffen.